# EUROPEAN PATENT SPECIFICATION

(11) **EP 1 383 604 B1**
(45) Date of publication and mention of the grant of the patent: **08.12.2004**
(21) Application number: 03734957.8
(22) Date of filing: 15.01.2003
(51) Int. Cl.: B01L 3/00, B01D 29/00

(54) **UNIDIRECTIONAL FLOW CONTROL SEALING MATT FOR WELL PLATE**
MULDENPLATTEN-DICHTUNGSMATTE FÜR UNIDIREKTIONALE STRÖMUNGSSTEUERUNG
MAT D'ETANCHEITE A COMMANDE D'ECOULEMENT UNIDIRECTIONNEL POUR PLAQUE A PUITS

(30) Priority: 31.01.2002 US 62589
(43) Date of publication of application: 28.01.2004
(73) Proprietor: Varian, Inc., Palo Alto, CA 94304 (US)
(72) Inventor: ROBERTS, Roger, Q., Laguna Niguel, California 92677 (US); GRENZ, Robert, L., Santa Ana, California 92707 (US)
(74) Representative: Kirschner, Klaus Dieter, Dipl.-Phys.
(86) International application number: PCT/US2003/001224
(87) International publication number: WO 2003/064041

(56) References cited:
- WO-A-01/19520
- US-A- 4 948 564
- US-A- 5 227 137
- US-A- 6 083 761
- US-A- 6 159 368
- US-A1- 2001 001 644

## Description

The present invention generally relates to a filtration apparatus and more specifically relates to a multi-well filtration or solid phase extraction apparatus.

Multi-well filtration and/solid phase extraction assemblies are well known in the art and are used for the processing of biological liquid specimens for subsequent assay. Conventional assemblies typically comprise a filtration plate, or an extraction plate, having multiple wells for receiving a liquid specimen, and a collection tray having a plurality of wells for collecting filtrate. The filtration/extraction plate and the collection tray are disposed in a stacked relationship such that individual collection wells are associated each with a single filtration/extraction well. A conventional multi-well filtration plate has ninety six wells for processing multiple samples simultaneously. Each well typically contains a separating media, for example a filter member, for partitioning a biological component from the liquid that is introduced into the nitration plate, and allowing a liquid portion of the biological fluid to flow into the collection tray.

Leakage or premature flow through the filtration/extraction plate is undesirable. Heretofore, there has been no available apparatus or method for positively preventing fluid flow through a filtration/extraction plate prior completion of any reaction.

It is an object of the invention to provide a well plate seal and a method for providing flow control to exit ports of a multi-well filtration/extraction plate wherein a leakage or premature flow through the filtration/extraction plate is prevented.

This object is achieved by the well plate seal of claim 1 and the method of claim 8. Advantageous embodiments of the invention are characterized in the sub-claims.

A well plate seal in accordance with present invention generally includes a matt heading a plurality spaced apart wells for engaging and sealing a plurality of exit ports in a multi-well filtration/extraction plate. A unidirectional flow control valve is disposed in each of the plurality of matt wells for enabling liquid flow out of each exit port only upon application of a pressure differential across each exit port. More particularly the matt is preferably flexible for facilitating a removable engagement with the filtration/extraction plate exit ports and the matt and plurality of valves are also preferably integrally molded with the matt.

Each of the plurality of valves may comprise a duck-bill valve and the matt may be suitable for use with filtration/extraction plates having ninety six wells.

In order to facilitate placement of the well plate seal onto a filtration/extraction plate and seal each of the exit ports each matt well includes a tapered side wall.

The present invention provides for a unidirection flow control sealing matt for use with both the filtration and extraction plate apparatus.

The present invention will be more clearly understood and the objects and advantages better appreciated by referring to the following detailed description considered in conjunction with the accompanying drawings of which:
Figure 1 shows an exploded perspective view of prior art multi-well filtration apparatus for which the present invention is directed;
Figure 2 shows an exploded view of the multi-well filtration apparatus shown in Figure 1 with the unidirectional flow control sealing matt in accordance with the present invention;
Figure 3 shows a cross-sectional view of the apparatus showing the sealing matt in place for controlling flow through the multi-well extraction plate;
Figure 4 is an enlarged perspective view of a duck-bill valve which provides unidirectional flow control; and
Figure 5 is a cross-sectional view of the valve shown in Figure 4.

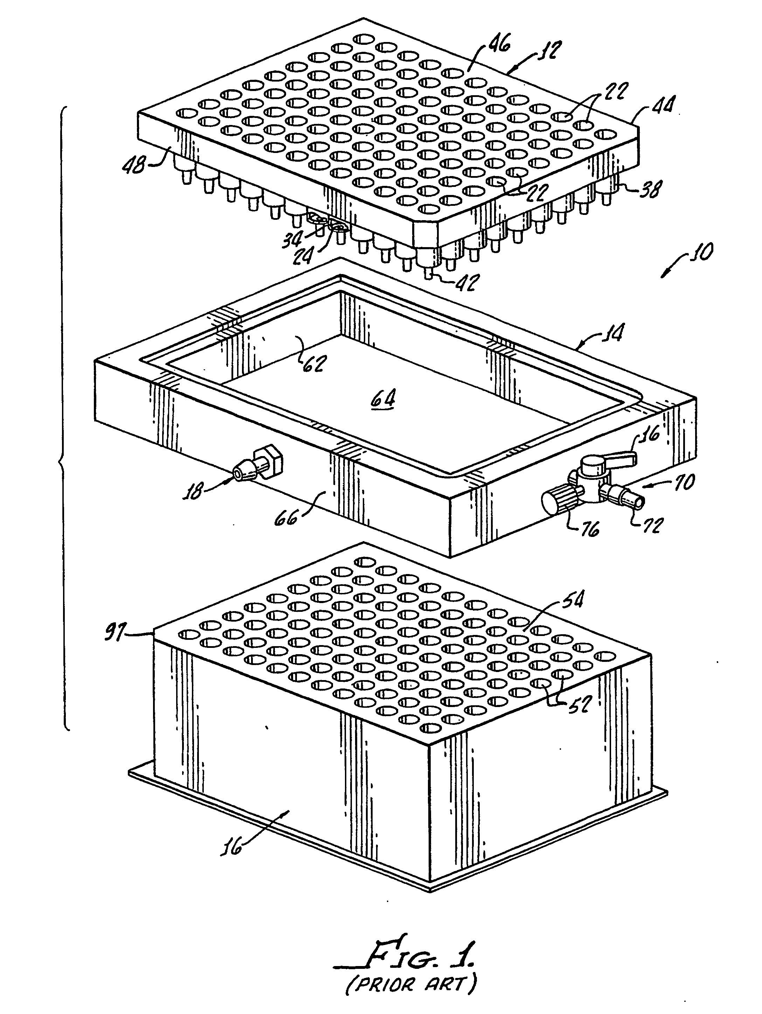

Turning now to Figure 1, prior art multi-well filtration apparatus 10 for use with the present invention is shown. This apparatus 10 is shown in copending U.S. patent application SN 09/767,500 filed January 23, 2001. The apparatus 10 is described hereinafter in order to clearly explain the use of the present invention.

The apparatus 10 generally includes a filtration/extraction plate 12 adapted to receive a fluid, for example a blood specimen or other biological fluid, a vacuum collar 14, and collection means 16 for capturing and containing components of the biological fluid passed through the filtration/extraction plate 12. Means, for example a hose barb connector 18, for connecting the vacuum collar 14 to a vacuum source (not shown) is also included.

The filtration/extraction plate 12 may comprise a conventional, multi-well filtration/extraction plate. The filtration/extraction plate 12 includes means, including a plurality of wells 22, for example ninety six wells, for receiving multiple test samples of a biological fluid to be processed by filtration or solid phase filtration/extraction techniques. The filtration/extraction plate wells 22 will hereinafter sometimes be referred to as "filtration wells". It will be appreciated that the number of wells 22 found in the extraction plate 12 in the embodiment 10 shown is simply a matter of convenience for the analyst or investigator. The filtration/extraction plate 12 may contain as few as one well, or as many wells as are functionally permissible to give the actual dimensions of the plate 12 (e.g. 384 or 1526 wells). Typical test samples of a biological fluid are often less than about 100 microliters in volume, and the wells 22 are sized appropriately to contain these small volumes. The filtration/extraction plate 12 may be formed of any resilient and non-reactive material that is commonly available.

A filtration/extraction media 24 may be disposed generally at a bottom of each of the filtration wells 22 and functions to separate and retain components of the biological fluid as the fluid passes through the well 22. The filtration/extraction media 24 comprises any filter, membrane, matrix or the like, in a single layer or multiple layers thereof, that is suitable for the application on hand.

The filtration/extraction plate 12 may be a substantially unitary, molded structure with each of the filtration wells 22 comprising a generally cylindrical or frusta conical aperture 34 extending through a full thickness, or depth, of the filtration/extraction plate 12. More specifically, each filtration well 22 includes a relatively wide receiving inlet portion 38 and relatively smaller exit port 42 forming a nozzle-like tip. The filtration/extraction media 24 is disposed at the bottom of the inlet portion 38 as shown, and may be held in place by friction, a retaining ring, or other conventional means (not shown). The filtration/extraction plate 12 includes a substantially rectangular upper portion 44 having a face 46 in which the filtration wells 22 form a matrix arrangement as shown and a lower portion 48 from which the exit ports 42 of the filtration wells 22 depend.

The collection means 16 comprises a multi-well collection plate 54. The collection plate 50 includes means, for example a plurality of wells 52, for receiving a liquid component, i.e. filtrate or eluate, of the biological fluid sample which is discharged from exit ports 42 of the filtration wells 22. The collection plate 50 may include any number of such wells 52, with a ninety six well collection plate being a typical example.

A vacuum collar 14 may be adapted to interface and interconnect the filtration/extraction plate 12 and the collection plate 16. More specifically, the vacuum collar 14 includes inner wall 62 defining a generally central space 64, and an outer wall 66. Space 64 is sized to receive the lower portion 48 of the filtration/extraction plate 12 and the face 54 of the collection plate 16.

When the vacuum collar 14 is interconnected between the filtration/extraction plate 12 and the collection plate 16, each one of the collection wells 52 is aligned with an associated one of the filtration wells 22. In the shown embodiment, the vacuum collar 14 is adapted to position the outlet tips 42 of the filtration wells 22 a specified distance into the collection wells 52, thereby insuring that filtrates or eluates will not contaminate adjoining wells.

In addition to the hose barb fitting 18, the vacuum collar 14 may include a valve 70 in communication with the chamber 64. The valve 70 may be used to facilitate venting of the system as needed, through port 72, and may be opened and closed by means of handle 16.

It should be easily appreciated from the description of the filtration/extraction apparatus described and shown in Figure 1 that there is no positive means for preventing fluid passage through the exit ports 42 of fluid deposited in the wells 22. Thus, there is an opportunity for premature leakage or passage of fluids through the exit ports 42 which may cause incomplete reactions of specimens disposed in the individual wells 22.

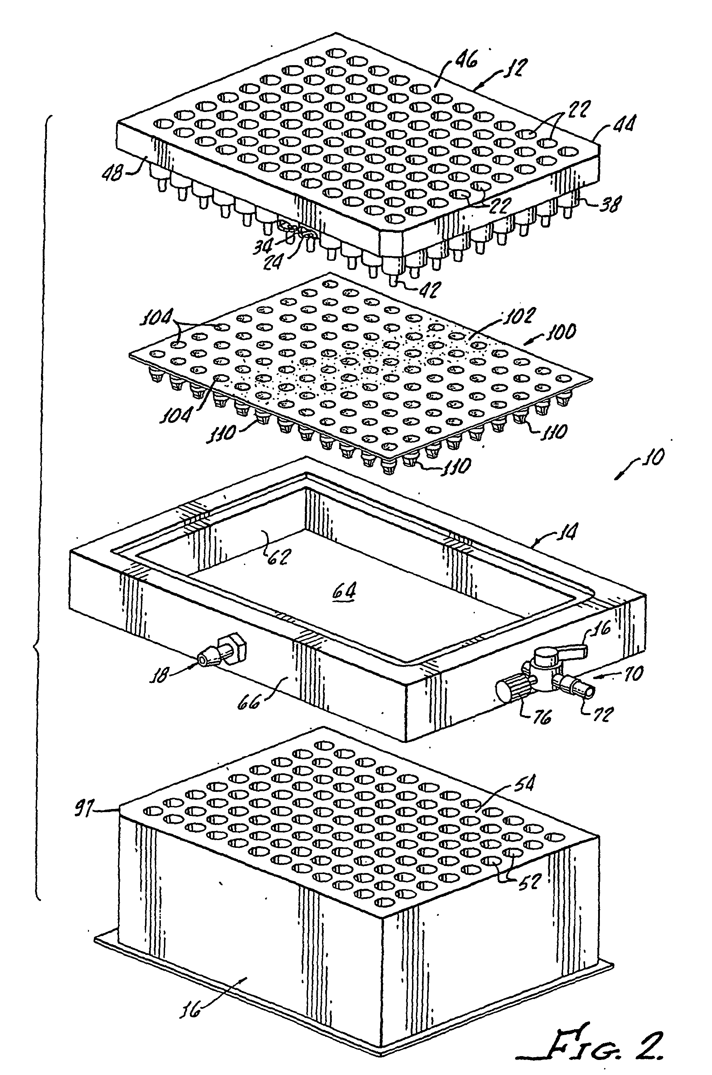

With reference to Figure 2 there is shown a well plate seal 100 in accordance with the present invention which solves this problem. Also shown Figure 2 and in combination therewith is the apparatus 10 with character references therein identifying identical or substantially similar elements as hereinabove discussed in connection with the prior art shown in Figure 1.

The well plate seal 100 includes a sealing mat 102 having a plurality of spaced apart wells 104 for engaging in sealing a plurality of the exit ports 42 of the multi-well filtration/extraction plate 12.

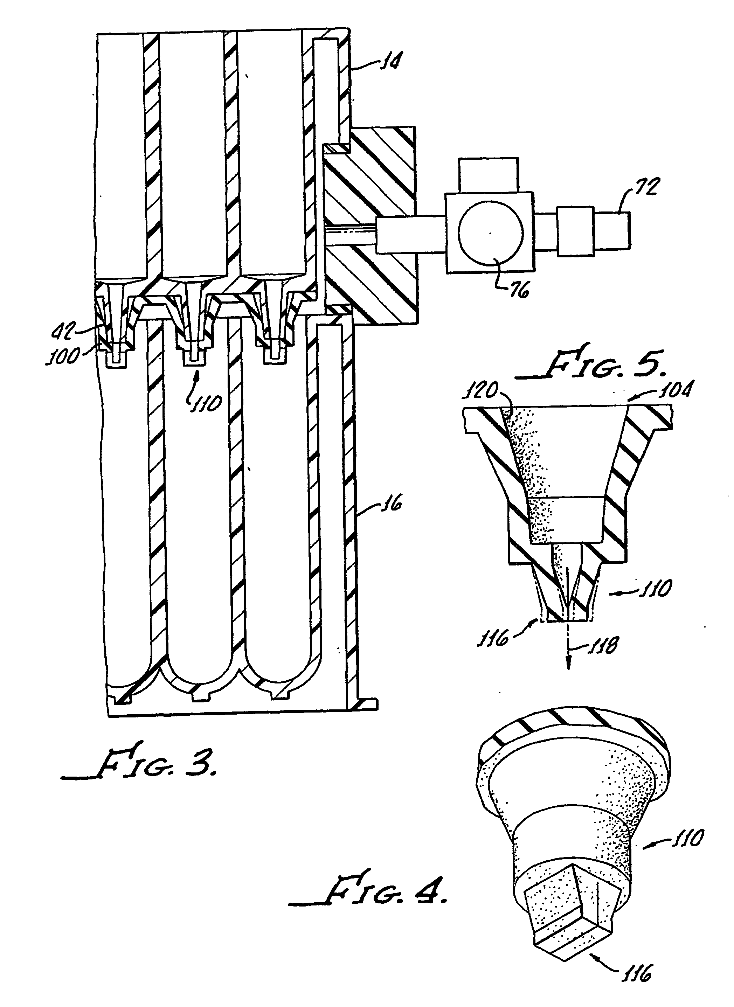

Unidirectional flow control valves preferably duck-billed valves, 110, more clearly shown in Figures 3-5, are disposed in each of the plurality of matt wells 104 for enabling liquid flow out of each of the exit ports 42 only upon application of a pressure differential across each exit port 42 which is selectively established by the apparatus 10 hereinabove described.

The well plate seal 100 may be formed in any suitable material, such as silicon or the like and is preferably flexible for facilitating removable engagement with the extraction plate exit port 42. The mat 102 may be disposable or reusable with proper decontamination procedures as desired.

As shown the mat 102 and plurality of valves 110 are integrally molded to facilitate mass production thereof. The mats 102 may be molded with perforations (not shown) between rows and/or columns of the valves 110 to enable adaption of the matt 102 for a various sized extraction plates (not shown) with a different numbers of exit ports.

With reference to Figures 3-5 the plurality of valves 110 each include a duck-billed valve 116 which enables unidirectional flow, as indicated by the arrow 118 in Figure 5, upon application of a pressure differential across each exit port 110 as provided by the apparatus 10 hereinabove described. The duck-billed valve 116 and matt 102 are preferable integrally molded in order to facilitate manufacture thereof as hereinabove noted.

As most clearly shown in Figure 5 each matt well 104 includes tapered side walls 120 for facilitating placement of the well plate seal 100 including the matt 102 on each of the exit ports 42. The tapered side walls 120 enable the guiding and justification of the matt 102 with the plurality of exit ports 42 to achieve an assembly as shown in Figure 3.

A method in accordance with the present invention for providing flow control to exit port 42 of the multi-welled filtration/extraction plate 12 includes the steps of installing on to the multi welled filtration/extraction plate 12 a matt 102 having a plurality of spaced apart wells 104 with each well 104 sealing a corresponding exit port 42. Each well 104 includes a unidirectional flow valve 116 for enabling liquid flow out of each exit port 42 only upon application of a pressure differential across each exit port 42. The method further includes applying a pressure differential across each exit port 42 utilizing the apparatus 10.

More particularly with the method in accordance with the present invention provides for providing a tapered side wall 10 on each matt well 104 for facilitating placement of the matt 102 onto the multi-well extraction plate 12.

More specifically this step of installing matt 102 onto the multi-well filtration/extraction plate 12 includes installing the matt 102 with the flow valves 110 comprising duck-billed valves 116.

Although there has been hereinabove described a particular arrangement and method of a well plate seal in accordance with the present invention for the purpose of illustrating the matter in which the invention may be used with vantage, it should be appreciated that the invention is not limited thereto. Accordingly, any and all modification which may occur to those skilled in the arts should be considered to be within the scope of the present invention as defined in the appended claims.

## Claims

1. A well plate seal comprising:
a matt (102) having a plurality of spaced apart wells (104) for engaging and sealing a plurality of exit ports (42) in a multi well filtration/extraction plate (12); and
a unidirectional flow control valve disposed in each of the plurality of matt wells for enabling liquid flow out of each exit port only upon application of a pressure differential across each exit port.

2. The well plate seal according to claim 1, wherein each well (104) has a tapered sidewall (120) for facilitating placement of said matt (102) onto the filtration/extraction plate (12) and sealing each of the exit ports (42).

3. The well plate seal according to claim 1 or 2 wherein said matt (102) is flexible for facilitating removable engagement with the filtration/extraction plate exit ports (42).

4. The well plate seal according to claim 1 or 2 wherein said matt (102) and plurality of valves (110) are integrally molded.

5. The well plate seal according to claim 1 or 2 wherein each of the plurality of valves (110) comprise a duck-billed valve.

6. The well plate seal according to claim 5 wherein said matt (102) includes ninety six wells (104) spaced apart in a rectangular pattern.

7. The well plate seal according to any of the preceding claims wherein each well (104) includes a tapered sidewall (120) for facilitating placement of the matt (102) onto the filtration/extraction plate (12) and sealing each of the exit ports (42).

8. A method for providing flow control to exit ports of a multi-well filtration/extraction plate having a plurality of exit ports, said method comprising the steps of:
installing onto said multi-well filtration/extraction plate a matt having a plurality of spaced apart wells, each well sealing a corresponding exit port and each well having a unidirectional flow valve for enabling liquid flow out of each exit port only upon application of a pressure differentiated across each exit port; and
applying the pressure differential across each exit port.

9. The method according to claim 8 further comprising the step of providing a tapered sidewall on each matt well for facilitating placement of said matt onto said multi-well filtration/extraction plate.

10. The method according to claim 9 wherein the step of installing the matt onto said multi-well filtration/extraction plate includes installing the matt with the flow valves comprising duck-billed valves.

## Patentansprüche

1. Muldenplattendichtung, umfassend:
eine Matte (102) mit einer Vielzahl von beabstandeten Wänden (104) zum Eingreifen und Abdichten einer Vielzahl von Auslassöffnungen (42) in einer Multimuldenfiltrations-/Extraktionsplatte (12); und
ein undirektionales Strömungssteuerungsventil, das in jeder Muldenplatte der Vielzahl von Mattenmulden angebracht ist, um eine Flüssigkeitsströmung aus jeder Auslassöffnung nur bei Anwendung eines Druckdifferenziales über jede Auslassöffnung zu ermöglichen.

2. Muldenplattendichtung nach Anspruch 1, worin jede Mulde (104) eine abgeschrägte Seitenwand (120) hat, um die Platzierung der Matte (102) auf der Filtrations-/Extraktionsplatte (12) zu erleichtern und um jede der Auslassöffnungen (42) abzudichten.

3. Muldenplattendichtung nach Anspruch 1 oder 2, worin die Matte (102) flexibel ist, um den entfernbaren Eingriff mit den Auslassöffnungen (42) der Filtrations-/Extraktionsplatte zu erleichtern.

4. Muldenplattendichtung nach Anspruch 1 oder 2, worin die Matte (102) und die Vielzahl der Ventile (110) integral hergestellt sind.

5. Muldenplattendichtung nach Anspruch 1 oder 2, worin jedes Ventil aus der Vielzahl der Ventile (110) ein Schnabelventil umfasst.

6. Muldenplattendichtung nach Anspruch 5, worin die Matte (102) 96 Mulden (104) enthält, die in einem rechtwinkligen Muster voneinander beabstandet sind.

7. Muldenplattendichtung nach den obigen Ansprüchen, worin jede Mulde (104) eine abgeschrägte Seitenwand (120) enthält, um die Platzierung der Matte (102) auf der Filtrations-/Extraktionsplatte (12) zu erleichtern und um jede Auslassöffnung (42) abzudichten.

8. Verfahren, um eine Strömungssteuerung für Auslassöffnungen einer Multimulden-Filtrations-/Extraktionsplatte mit einer Vielzahl von Auslassöffnungen zur Verfügung zu stellen, wobei das Verfahren die Schritte umfasst:
Installieren auf der Multimuldenfiltrations-/Extraktionsplatte einer Matte mit einer Vielzahl von beabstandeten Mulden, wobei jede Mulde eine entsprechende Auslassöffnung abdichtet und jede Mulde ein unidirektionales Strömungsventil hat, um eine Flüssigkeitsströmung aus jeder Auslassöffnung nur bei Anwendung eines Druckes, der über jeder Auslassöffnung einen unterschiedlichen Verlauf hat; und
Anwendung des Druckdifferenziales über jede Auslassöffnung.

9. Verfahren nach Anspruch 8, das ferner den Schritt zur Verfügungstellung einer abgeschrägten Seitenwand auf jeder Mattenmulde umfasst, um die Platzierung der Matte auf der Multimuldenfiltrations-/Extraktionsplatte zu erleichtern.

10. Verfahren nach Anspruch 9, worin der Schritt zum Installieren der Matte auf der Multimuldenfiltrations-/Extraktionsplatte das Installieren der Matte mit den Strömungsventilen enthält, die Schnabelventile umfassen.

## Revendications

1. Dispositif d'étanchement à plaques perforées, comprenant:
- une matte (102) ayant une pluralité de trous distancés (104) pour la position et l'étanchement d'une pluralité de canaux de sortie (42) dans une plaque de filtrage/extraction à trous multiples (12); et
- une soupape directionnelle de contrôle du débit disposée dans chaque trou de la pluralité de trous existants dans la matte pour permettre l'écoulement du liquide de chaque canal de sortie seulement après l'application d'une pression différentielle sur chaque canal de sortie.

2. Dispositif d'étanchement à plaques perforées, selon la revendication 1, où chaque trou (104) a une paroi latérale conique (120) pour faciliter la position de ladite matte (102) sur la plaque de filtrage/extraction (12), étanchant chacun des canaux de sortie (42).

3. Dispositif d'étanchement à plaques perforées, selon la revendication 1 ou 2, où ladite matte (102) est flexible pour faciliter un assemblage démontable avec les canaux de sortie (42) de la plaque de filtrage/extraction.

4. Dispositif d'étanchement à plaques perforées, selon la revendication 1 ou 2, où ladite matte (102) et la pluralité de soupapes (110) sont entièrement coulées.

5. Dispositif d'étanchement à plaques perforées, selon la revendication 1 ou 2, où chaque soupape de la pluralité de soupapes (110) est une soupape à bec de canard.

6. Dispositif d'étanchement à plaques perforées, selon la revendication 5 où ladite matte (102) comprend quatre-vingt-seize trous (104) distancés dans un modèle rectangulaire.

7. Dispositif d'étanchement à plaques perforées, selon l'une quelconque des revendications antérieures, où chaque trou (104) comprend un paroi latérale conique (120) pour faciliter le placement de la matte (102) sur la plaque de filtrage/extraction (12) et étanchant chacun des canaux de sortie (42).

8. Méthode pour prévoir le contrôle du débit aux canaux de sortie d'une plaque de filtrage/extraction à trous multiples ayant une pluralité de canaux de sortie, ladite méthode comprenant les pas de:
- installant sur la plaque de filtrage/extraction à trous multiples une matte ayant une pluralité de trous distancés, chaque trou étanchant un canal de sortie correspondant et chaque trou ayant une soupape directionnelle de débit pour permettre l'écoulement du liquide de chaque canal de sortie seulement après l'application d'une pression différentielle sur le canal de sortie; et
- appliquant la pression différentielle à chaque canal de sortie.

9. Méthode selon la revendication 8 comprenant en outre le pas de prévoir une paroi latérale conique à chaque trou de matte pour faciliter le placement de ladite matte sur ladite plaque de filtrage/extraction à trous multiples.

10. Méthode selon la revendication 9, où le pas d'installer la matte sur ladite plaque de filtrage/extraction comprend l'installation de la matte ensemble avec les valves de débit qui sont des valves de débit à bec de canard.
